# EUROPÄISCHE PATENTSCHRIFT

(11) **EP 0 840 866 B1**
(45) Veröffentlichungstag und Bekanntmachung des Hinweises auf die Patenterteilung: **06.12.2000**
(21) Anmeldenummer: 97924880.4
(22) Anmeldetag: 07.05.1997
(51) Int. Cl.: F16L 27/087

(54) **DREHDURCHFÜHRUNG FÜR HOHE DRÜCKE UND HOHE RELATIVGESCHWINDIGKEITEN**
ROTARY TRANSMISSION LEADTHROUGH FOR HIGH PRESSURES AND HIGH RELATIVE SPEEDS
PASSAGE TOURNANT POUR HAUTES PRESSIONS ET VITESSES RELATIVES ELEVEES

(30) Priorität: 24.05.1996 DE 19621020
(43) Veröffentlichungstag der Anmeldung: 13.05.1998
(73) Patentinhaber: Gat Gesellschaft für Antriebstechnik mbH, 65201 Wiesbaden (DE)
(72) Erfinder: OTT, Stephan, D-65185 Wiesbaden (DE); GERNAND, Georg, D-57223 Kreuztal (DE)
(86) Internationale Anmeldenummer: DE9700960
(87) Internationale Veröffentlichungsnummer: WO9745667

(56) Entgegenhaltungen:
- DE-A- 3 325 880
- DE-A- 3 806 931
- FR-A- 2 219 710
- GB-A- 2 171 765
- US-A- 4 234 215

## Beschreibung

Die vorliegende Erfindung betrifft eine Drehdurchführung zur Überführung von unter Druck stehendem Arbeitsfluid von einem stehenden in ein rotierendes Maschinenteil und/oder umgekehrt, mit einem dem stehenden Maschinenteil zugeordneten Gehäuse, einer dem rotierenden Maschinenteil zugeordneten Welle, die sich in das Gehäuse hinein und wahlweise auch durch dieses hindurch erstreckt, mindestens einer in dem Gehäuse aufgenommenen Buchse, welche die Welle dicht umfaßt und welche im Gehäuse abgedichtet und radial elastisch bewegbar gelagert ist, wobei die Innenfläche der Buchse und die Mantelfläche der Welle mit aufeinander gleitenden Dichtflächen ausgestattet sind, und die Buchse mindestens eine radiale Bohrung aufweist, die über einen auf der Mantelfläche der Welle und/oder der Innenfläche der Buchse umlaufenden Ringkanal mit mindestens einer radialen Bohrung der Welle verbunden ist zur Hindurchleitung von unter Druck stehendem Arbeitsfluid durch die Bohrung der Buchse zu einer sich axial in der Welle erstreckenden Fluidleitung, die mit der Radialbohrung der Welle in Verbindung steht.

Eine derartige Drehdurchführung ist z.B. aus der deutschen Offenlegungsschrift Nr. 38 06 931 bekannt. Bei der bekannten Drehdurchführung geht es darum, eine Drehdurchführung mit Radialspalt so zu verbessern, daß diese bei allen Betriebsbedingungen, insbesondere auch bei hohen Drehzahlen und gleichzeitig hohen Drücken absolut betriebssicher arbeitet und zudem geringste Leckagen aufweist. Erreicht wird dies durch die radial verschiebbare Lagerung der Buchse, wodurch Fertigungstoleranzen und etwaige Vibrationen oder Abweichungen von der konzentrischen Lage der beiden Gleitdichtflächen ausgeglichen werden können, ohne daß eine übermäßige Reibung zwischen den Gleitdichtflächen entsteht. Zwar ist es durch die Zwischenschaltung der radial elastisch und gleichzeitig abgedichtet in dem Gehäuse gelagerten Buchse möglich, die Rotationsgeschwindigkeiten und/oder Durchmesser der Drehdurchführungen ohne übermäßige Leckverluste zu steigern, jedoch sind in manchen Anwendungsfällen derartige Drehdurchführungen immer noch ein die Drehzahlen und/oder Durchmesser von Wellen begrenzendes Element. Insbesondere, wenn der Arbeitsdruck nicht konstant hoch ist, sondern zwischen hohen und niedrigeren Werten wechselt, kann man mit der bekannten Lösung einen sicheren, reibungsarmen Betrieb ohne Festfressen und eine gleichzeitig geringe Leckrate nicht erreichen. Aus diesem Grunde ist man teilweise auch dazu übergegangen, entsprechende Drehdurchführungen zum Beispiel an einen nicht Drehmoment übertragenden, wenig belasteten Verlängerungsabschnitt bzw. Ende einer Welle zu verlagern, der dementsprechend mit einem verjüngten Durchmesser ausgestattet werden kann. Dabei entsteht jedoch das Problem, die axial in der Welle verlaufenden Leitungen entsprechend zu positionieren bzw. die Verbindung mit den axial verlaufenden Leitungsabschnitten in dem Verlängerungsbereich der Welle herzustellen. Die Welle bzw. das rotierende Maschinenteil werden hierdurch wesentlich komplizierter. Außerdem ist es mitunter notwendig, die Übertragung des Arbeitsfluids im einem drehmomentübertragenden Abschnitt der Welle mit entsprechend großem Durchmesser vorzunehmen.

Die sogenannten Gleitdichtflächen zwischen Welle und Buchse sind bei derartigen Drehdurchführungen auch nicht dafür vorgesehen, tatsächlich unter Reibung aufeinander zu gleiten, sondern es soll zwischen diesen idealerweise konzentrischen, zylindrischen Dichtflächen nach Möglichkeit ein sehr enger, aDer gleichmäßiger und von dem Arbeitsfluid oder Schmiermittel durchsetzter Spalt vorhanden sein, durch welchen ein möglichst geringer Leckstrom abfließt. Je enger dieser Spalt jedoch ist, desto eher kommt es auch zu direkten Berührungen zwischen Welle und Buchse und schlimmstenfalls zu einem Festfressen. Bei größeren Spaltweiten kommt es dagegen zu hohen Leckverlusten, die insbesondere bei hohen Drücken und großen Wellendurchmessern nicht mehr hinnehmbar sind.

Gegenüber diesem Stand der Technik liegt der vorliegenden Erfindung die Aufgabe zugrunde, eine Drehdurchführung mit den eingangs genannten Merkmalen zu schaffen, welche eine weitere Steigerung der Wellendurchmesser, der Relativgeschwindigkeiten der aufeinander gleitenden Flächen und/oder der Drücke, insbesondere auch wechselnde Drücke, unter welchen Arbeitsfluid zugeführt werden kann, erlaubt.

Diese Aufgabe wird dadurch gelöst, daß eine Entlastungseinrichtung vorgesehen ist, indem die Buchse mindestens eine von der Zufuhrbohrung für das Arbeitsfluid getrennte radiale Bohrung aufweist, die sich zu einer entweder auf der Innenfläche der Buchse oder der Außenfläche der Welle ausgebildeten Druckkammer erstreckt und unabhängig von der Zufuhr von Arbeitsfluid durch die Zufuhrbohrung mit Fluiddruck beaufschlagbar ist.

Arbeitsfluid ist dabei im Sinne der vorliegenden Beschreibung ein für irgendeinen beliebigen Zweck vorgesehenes Fluid, z. B. Hydrauliköl, ein Spülmittel, Wasser oder Druckluft. Der Begriff "Arbeitsfluid" wird hier im wesentlichen nur zur Unterscheidung gegenüber dem Entlastungsfluid verwendet, das allerdings auch mit dem Arbeitsfluid identisch sein kann. Auch die Welle muß nicht im herkömmlichen Sinne ein Drehmomente übertragendes Bauteil sein, sondern bezeichnet in dieser Beschreibung lediglich ein rotierendes, zylindrisches Maschinenteil. Außerdem könnten auch die Rollen von drehendem und stehendem Maschinenteil vertauscht sein, so daß die Welle das stehende Maschinenteil wäre.

Die sogenannten Gleitdichtflächen sind bei derartigen Drehdurchführungen auch nicht dafür vorgesehen, tatsächlich unter Reibung aufeinander zu gleiten, sondern es soll zwischen diesen idealerweise konzentrischen, zylindrischen Dichtflächen nach Möglichkeit ein sehr enger, aber gleichmäßiger und von dem Arbeitsfluid oder Schmiermittel durchsetzter Spalt vorhanden sein, durch welchen ein möglichst geringer Leckstrom abfließt. Je enger dieser Spalt jedoch ist, desto eher kommt es auch zu direkten Berührungen zwischen Welle und Buchse und schlimmstenfalls zu einem Festfressen. Bei größeren Spaltweiten kommt es dagegen zu hohen Leckverlusten, die insbesondere bei hohen Drücken und großen Wellendurchmessern nicht mehr hinnehmbar sind.

Die zwischen Innenfläche der Buchse und Außenfläche der Welle ausgebildete Druckkammer, die unabhängig von der Zufuhr des Arbeitsfluids in die Welle mit Druck beaufschlagbar ist, sorgt für eine gewisse Aufweitung der Buchse und vermindert die Andruckkraft und Reibung zwischen den aufeinander gleitenden Dichtflächen selbst dann, wenn Arbeitsfluid gerade nicht zugeführt wird bzw. nicht unter hohem Druck ansteht. Bei den herkömmlichen Drehdurchführungen besteht ein Problem unter anderem auch darin, daß die Reibung zwischen den Gleitdichtflächen zwar während der Zufuhr von Arbeitsfluid noch akzeptabel ist und gleichzeitig die entstehende Reibungswärme auch durch das Arbeitsfluid teilweise abgeführt wird, daß jedoch die Reibung und die entstehende Reibungswärme sich sehr schnell vergrößern, wenn die Zufuhr von Arbeitsfluid unterbrochen bzw. der Druck des Arbeitsfluids erheblich vermindert wird. In vielen Anwendungsfällen ist jedoch die Zufuhr von Arbeitsfluid nur während bestimmter, oftmals kurzer Zeitabschnitte vorgesehen, wobei jedoch das rotierende Maschinenteil sich ständig weiter dreht und damit die Gleitdichtflächen aufeinander reiben.

Durch die unabhängige Zuführung von Fluid unter Druck in die Entlastungskammer, die in Form einer Aussparung oder Nut in einer oder beiden Gleitdichtflächen vorgesehen ist, wird nicht nur permanent ein Schmierfilm zwischen den Gleitdichtflächen aufrechterhalten, sondern der in der Entlastungskammer selbst und zwischen den angrenzenden Gleitdichtflächen herrschende Druck weitet die Buchse geringfügig auf und drückt die Gleitdichtflächen soweit auseinander, daß sie einander kaum berühren und die Reibung und die entstehende Reibungswärme erheblich vermindert werden. Wie auch bei den herkömmlichen Drehdurchführungen wird das zwischen die Gleitdichtflächen eindringende Fluid axial außerhalb der Buchse in entsprechend vorgesehenen Lecksammelräumen aufgefangen und in eine Leckwanne oder dergleichen zurückgeführt. Im Vergleich zu den bekannten Drehdurchführungen kann die Buchse mit noch engerer Passung hergestellt werden, da das in die Entlastungskammer zugeführte Fluid die Reibung zwischen Buchse und rotierendem Maschinenteil bzw. Welle verhindert bzw. vermindert. Damit werden auch die Leckverluste selbst bei hohen Drücken und großen Wellendurchmessern und/oder hohen Relativgeschwindigkeiten zwischen den Gleitflächen auf ein akzeptables Niveau abgesenkt. Zweckmäßigerweise wird als Entlastungsfluid, soweit möglich, dasselbe Fluid verwendet, welches auch als Arbeitsfluid dient. Dies gilt insbesondere für Fluide mit Schmiermitteleigenschaften.

In einer ersten Ausführungsform der Erfindung ist die Entlastungskammer als ringförmig umlaufende Nut ausgebildet und zwar entweder in der Außenfläche bzw. Mantelfläche der Welle oder, was bevorzugt ist, in der Innenfläche der Buchse. Der in dieser Entlastungskammer entlang des Umfanges herrschende, gleichmäßige Druck sorgt für eine gleichmäßige, wenn auch äußerst geringfügige Aufweitung der Buchse und hat auch eine gewisse Zentrierwirkung zwischen Buchse und Welle, die möglicherweise damit zusammenhängt, daß die rotierende Welle das Fluid aus der Entlastungskammer in den Dichtungsspalt entlang der Gleitdichtflächen zwischen Welle und Buchse mitnimmt und/oder daß der Druck im breiteren Spalt schneller zum Leck hin abgebaut wird. Das entstehende Druckprofil wirkt in Richtung einer Zentrierung der den Spalt bildenden Dichtflächen an Welle und Buchse.

In einer anderen, bevorzugten Ausführungsform der Erfindung ist diese Entlastungsnut in mehrere, voneinander getrennte Segmente aufgeteilt, d.h. es sind mehrere radiale Zufuhrbohrungen für das Entlastungsfluid vorgesehen, die jeweils mit einer eigenen, sich über ein Umfangssegment erstreckenden Entlastungskammer bzw. -nut verbunden sind. Vorzugsweise sind mindestens drei derartige Entlastungskammern vorgesehen, deren Zentren um jeweils 120° relativ zueinander versetzt sind und die sich z.B. über ein Umfangssegment von etwa 100 oder 110° erstrecken, während die verbleibenden Umfangssegmente die einzelnen Kammern voneinander trennen. In analoger Weise könnten auch vier oder mehr untereinander identische Kammern segmentartig und gleichmäßig um den Umfang der Welle verteilt sein. Dabei können die segmentartigen Nutabschnitte wahlweise in der Innenwand der Buchse und/oder auch in der Außenwand der Welle als Aussparungen der Gleitdichtflächen vorgesehen sein.

Besonders wirksam ist in diesem Zusammenhang eine Ausführungsform der Drehdurchführung bei welcher die Zufuhrleitungen für das Entlastungsfluid, vorzugsweise die radialen Zufuhrbohrungen jeweils eine Drossel enthalten, die derart eingestellt oder einstellbar ist, daß die Zufuhr von Entlastungsfluid durch diese Drossel sehr stark eingeschränkt wird, daß in dem mit diesem Entlastungsfluid versorgten Nutsegment ein Druckanfall gegenüber dem vor der Drossel anstehenden Versorgungsdruck auftritt, wenn der an dieses Nutsegment angrenzende Dichtungsspalt zwischen den Gleitdichtflächen eine maximale Weite hat. Ist der Dichtungsspalt enger, so ist der Druck in dem entsprechenden Nutsegment entsprechend größer. Auf diese Weise erreicht man mit Hilfe der Drosseln eine sehr gute Zentrierwirkung für die in der Buchse umlaufende Welle, da dort, wo die Welle fester an den Gleitdichtflächen der Buchse anliegt und wo potentiell eine größere Reibung und größere Reibungswärme entsteht, in dem auf dieser Seite angeordneten Nutsegment gegenüber den anderen Nutsegmenten ein höherer Druck entsteht, welcher die Buchse von dieser Seite der Welle wegdrückt. Dadurch werden die an die anderen Nutsegmente angrenzenden Dichtungsspalte kleiner, so daß sich auch dort ein höherer Druck aufbaut, so daß schließlich bei rotierender Welle ein dynamisches Gleichgewicht entsteht und die Welle optimal zentriert ist und eine minimale Reibung mit den Gleitdichtflächen der Buchse aufweist.

Die Entlastungsnuten bzw. -nutsegmente sind vorzugsweise paarweise vorhanden und in axialer Richtung beiderseits der Zufuhrbohrungen bzw. -nuten für Arbeitsfluid in den Gleitdichtflächen der Buchse und/oder der Welle vorgesehen.

Darüberhinaus sind noch zwischen den Entlastungsnuten bzw. -nutsegmenten und der Zufuhrbohrung bzw. Zufuhrnut für Arbeitsfluid in den Gleitflächen, vorzugsweise der Buchse, Entkopplungsnuten vorgesehen, die mit einer Leckleitung bzw. einem Leckabfluß verbunden sind und durch welche sichergestellt wird, daß durch den Dichtungsspalt das unter Druck stehende Arbeitsfluid nicht in die Nuten bzw. Nutsegmente der Entlastungseinrichtung eindringt und damit die Zentrierwirkung der Entlastungsnuten behindert bzw. aufhebt. Die Entkopplungsnut sorgt dafür, daß zwischen den Nuten bzw. Nutsegmenten der Entlastungseinrichtung und der Entkopplungsnut immer eine Druckdifferenz, nämlich zum Leckraum, vorhanden ist, die um so größer ist, je enger der Dichtungsspalt zwischen den Dichtflächen in dem Bereich zwischen dem betreffenden N utsegment und der Entlastungsnut ist. Ansonsten könnte die über den Dichtungsspalt zum Druck des Arbeitsfluids bestehende Verbindung die Zentrierwirkung der Nutsegmente beeinträchtigen. Eventuell von der Zufuhrungsbohrung bzw. Zufuhrungsnut für das Arbeitsfluid in Richtung der Entlastungsnut entweichendes Arbeitsfluid wird durch die Entkopplungsnut abgefangen und zu einem Lecksammelraum abgefangen. Ansonsten könnte die über den Dichtungsspalt zum Druck des Arbeitsfluids bestehende Verbindung die Zentrierwirkung der Nutsegmente beeinträchtigen.

Es versteht sich, daß auch die Entkopplungsnuten vorzugsweise paarweise vorgesehen sind und die Nuten für das Arbeitsfluid von dem Paar Entlastungsnuten bzw. Nutsegmenten trennen.

Die Druckquelle für das Entlastungsfluid kann grundsätzlich die gleiche sein wie die Druckquelle für das Arbeitsfluid und dementsprechend sind auch Arbeitsfluid und Entlastungsfluid vorzugsweise identisch. Durch Ventile könnte entsprechend sichergestellt werden, daß die Fluidzufuhr zu den Bohrungen und -Nuten für Arbeitsfluid unterbrochen werden kann, während gleichzeitig die Zufuhr in die Entlastungsnuten bzw. Nutsegmente weiterhin stattfindet und allenfalls bei Stillstand des rotierenden Maschinenteils gestoppt wird.

Es kann jedoch auch zweckmäßig sein, für das Entlastungsfluid eine separate Druckquelle vorzusehen, insbesondere dann, wenn die Druckquelle für das Arbeitsfluid nicht für einen konstanten DrucK ausgelegt ist oder gewechselt wird oder wenn man gezielt eine unabhängige Steuerung des Druckes in den Entlastungsnuten wünscht.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen die Achse enthaltenden Längsschnitt einer komplette Drehdurchführung gemäß der vorliegenden Erfindung
- Figur 2: einen axialen Längsschnitt nur durch eine Buchse, der mehr Details zeigt als in Figur 1 erkennbar sind und
- Figur 3: einen Querschnitt durch eine Buchse senkrecht zu ihrer Achse und in einer Ebene, welche Entlastungsnuten aufweist.

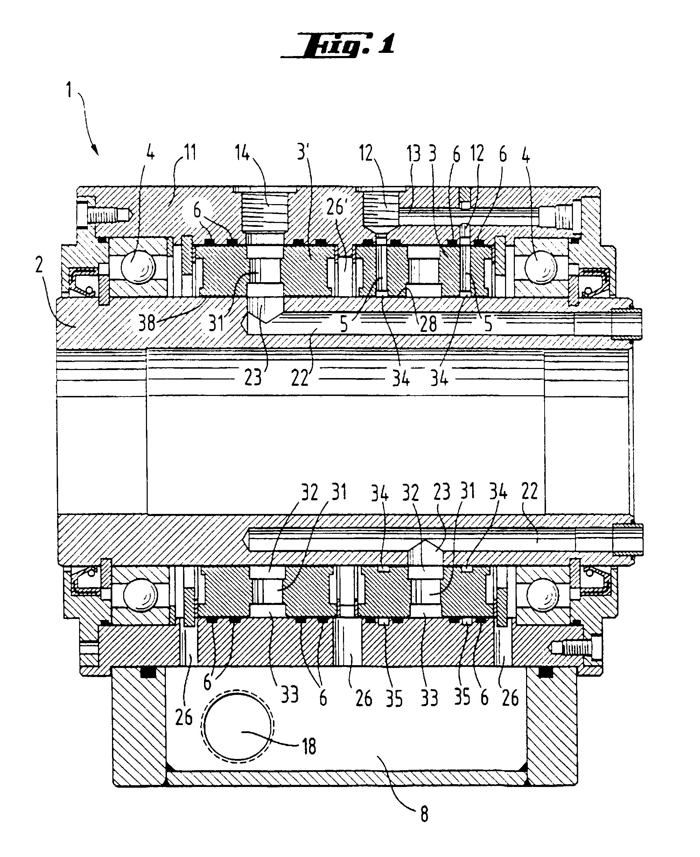

Man erkennt in Figur 1 ein stehendes Maschinenteil 1 und ein drehendes Maschinenteil in Form einer Welle 2. Das stehende Maschinenteil 1 besteht im wesentlichen aus einem Gehäuse 11 mit radialen Bohrungen 12 und 14 sowie einer axialen Bohrung 13, wobei weitere radiale und axiale Bohrungen außerhalb der dargestellten Querschnittsebene vorgesehen sind. Das Gehäuse 11 nimmt außerdem zwei Gleitdichtbuchsen 3, 3' auf, die mit einem geringen radialen Spiel im Inneren des Gehäuses angeordnet sind und die durch elastische O-Ringdichtungen 6 in dem Gehäuse 11 im wesentlichen zentriert und abgedichtet gehalten werden, jedoch unter leichter Verformung der O-Ringe in radialer Richtung elastisch bewegbar sind. Die O-Ringe sind in entsprechenden Nuten in der zylindrischen Innenwand des Gehäuses 11 aufgenommen, wobei diese Nuten allerdings auch in der Außenfläche der Buchsen vorgesehen sein könnten.

Die Buchsen 3, 3' sind durch einen nicht näher bezeichneten nach innen ragenden Bund zwischen den Buchsen und zwei ebenfalls nicht näher bezeichnete Sicherungsringe in ihrer axialen Position fixiert. Axial außerhalb der Buchsen sind im Gehäuse 11 noch zwei Kugellager 4 angeordnet, welche in erster Linie radiale aber auch axiale Lasten aufnehmen können. Den Abschluß der Drehdurchführung bilden in axialer Richtung zwei Gleitdichtungen mit elastischen Dichtlippen, die jedoch nur mit geringer Kraft an der Oberfläche der Welle 2 anliegen und so keine starke Reibung oder Reibungswärme hervorrufen.

Die radialen Bohrungen 12, 14 des Gehäuses 11 und auch die radialen Bohrungen 31 der Buchsen 3, 3' münden auf der Gehäuseinnenseite sowie auf der Buchsenaußenseite und -innenseite jeweils in umlaufenden Nuten 32 bzw. 33, so daß Fluid unabhängig von der relativen Positionierung der radialen Bohrungen 14, 31 des Gehäuses bzw. der Nuten in Umfangsrichtung über diese Bohrungen und die Nuten übertragen werden kann. Ebenso wird über die Nut 32 Fluid von der Bohrung 31 in die radiale und axiale Bohrung 23, 22 der Welle 2 übertragen, so daß es auch auf deren Position in Umfangsrichtung nicht ankommt.

Bezüglich der Zufuhr von Arbeitsfluid und aller anderen, bisher beschriebenen Merkmale sind die beiden Buchsen 3 und 3' identisch. Die Buchse 3 unterscheidet sich jedoch von der Buchse 3' durch eine Entlastungseinrichtung, die gebildet wird durch Nuten 34 und zusätzliche radiale Bohrungen 5 in der Buchse 3, über welche unter Druck stehendes Entlastungsfluid zugeführt wird. Selbstverständlich könnte auch die Buchse 3' mit einer entsprechenden Entlastungseinrichtung ausgestattet sein, jedoch ist auch die Kombination einer Buchse 3 mit Entlastungseinrichtung und einer Buchse 3' ohne Entlastungseinrichtung, wie sie in der Ausführungsform gemäß Figur 1 dargestellt ist, für bestimmte Anwendungsfälle sinnvoll, wenn nämlich z.B. das durch die Bohrungen 14, 31 und damit durch die Buchse 3' zugeführte Arbeitsfluid (zum Beispiel Wasser als Spülmittel) unter wesentlich geringerem Druck zugeführt wird bzw. zugeführt werden muß als das durch die Buchse 3 zugeführte Arbeitsfluid (z. B. Hydrauliköl). In diesem Fall können nämlich die Gleitdichtflächen zwischen der Buchse 3' d.h. deren zylindrischer Fläche 38 und die Mantelfläche 28 der Welle 2 in diesem Bereich mit einem etwas größeren Spiel hergestellt werden, weil aufgrund des geringen Drucks des zugeführten Fluids auch bei größeren Dichtungsspalten nur ein geringer Leckstrom abfließt, so daß in diesem Fall auch die entstehende Reibung und die Reibungswärme geringer sind. Auch wenn der Druck des Arbeltsfluids permanent hoch ist, kann man eventuell auf die separate Entlastung verzichten, weil nämlich auch das in den Dichtungsspalt eindringende Fluid eine ähnliche Wirkung hat, wie das von einer separaten, umlaufenden Entlastungsnut zugeführte Fluid. Die Entlastungseinrichtung ist jedoch notwendig oder zumindest sinnvoll, wenn die Relativgeschwindigkeiten der aufeinandergleitenden Flächen sehr groß und der Druck des Arbeitsfluids sehr hoch sind, aber auch gelegentlich niedrige Werte haben kann, d.h. insbesondere bei sehr schnell rotierenden Wellen oder bei mäßig schnell rotierenden Wellen mit großem Durchmesser, die z.B. mit Hydrauliköl oder dergleichen zu versorgen sind, welches gelegentlich unter sehr hohem Druck, oft oder manchmal aber auch unter sehr niedrigem Druck steht. Das Entlastungsfluid wird über die axiale Bohrung 13 und die radiale Bohrung 12 in dem Gehäuse zu den radialen Bohrungen 5 der Buchse 3 geführt, wobei auch hier wieder in der Innenfläche des Gehäuses 11 umlaufende Nuten 35 an der Mündung der radialen Bohrung 12 die Zufuhr des Fluids unabhängig von der Positionierung der Bohrung 5 in Umfangsrichtung sicherstellen.

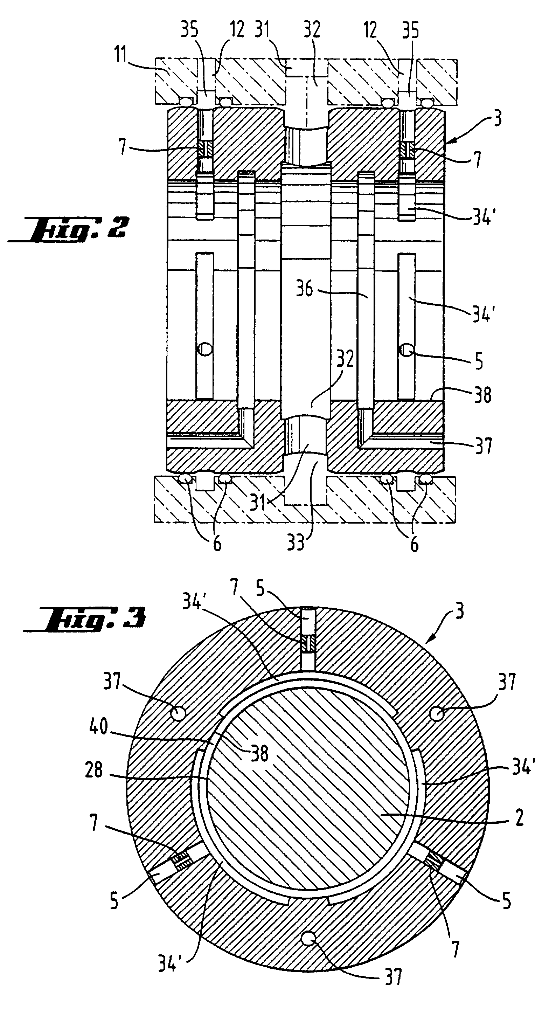

Die Entlastungsbohrungen münden ihrerseits auf der Innenseite der Buchse 3 in umlaufenden Nuten 34 oder aber in Nutsegmenten, wobei dann jedes Nutsegment über eine eigene radiale Zufuhrbohrung 5 versorgt wird. Weitere Details einer solchen Ausführungsform sind in den Figuren 2 und 3 dargestellt. In Figur 2 erkennt man nochmals in derselben Schnittebene wie im Falle der Figur 1, jedoch ohne Gehäuse 11 und Welle 2, eine Buchse 3, wobei die Schnittebene durch zwei diametral gegenüberliegende Zufuhrbohrungen 31 von Arbeitsfluid gelegt ist. Diese Zufuhrbohrung 31 mündet auf der Innenseite der Buchse 3 in eine umlaufende Nut 32, von welcher aus Fluid in die radiale Bohrung 23 der in Figur 1 dargestellten Welle 2 übertreten kann.

Die Entlastungseinrichtung ist paarweise auf beiden Seiten der Zufuhrbohrungen und -nuten für das Arbeitsfluid vorhanden, ist jedoch in Figur 2 nur auf der rechten Seite mit Bezugszeichen versehen und wird im folgenden beschrieben. Im einzelnen besteht die Entlastungseinrichtung aus drei unter Umfangsabständen von je 120° relativ zueinander versetzten Bohrungen 5, die auf der Innenseite in je ein Nutsegment 34' münden. In jeder der Bohrungen 5 ist eine Drossel 7 angeordnet, die wahlweise einstellbar sein kann.

Der Dicntungsspalt 40 zwischen der äußeren Zylindermantelfläche 28 der Welle 2 und der inneren zylindrischen Fläche 38 der Buchse 3 ist in Figur 3 stark übertrieben dargestellt. Tatsächlich liegen die Flächen 28, 38 in genauer Passung mit einem schmalen Dichtspalt aneinander an, wobei jedoch der Druck in den Nutsegmenten 34' für eine gewisse Aufweitung der Buchse 3 sorgt und den Reibungseingriff zwischen den Flächen 28, 38 vermindert. Genau dies ist Sinn und Zweck der Entlastungseinrichtung, wobei diese Entlastungswirkung und die Verminderung der Reibung auch schon dann deutlich spürbar wird, wenn statt mehrerer Nutsegmente 34' eine einzige umlaufende Nut vorgesehen wird, für die dementsprechend auch nur eine einzige Zufuhrbohrung 5 vorhanden sein muß. Auch die Drossel 7 könnte dann entfallen.

Die drei Nutsegmente 34' bzw. das in diesen unter Druck aufgenommene Entlastungsfluid üben zusätzlich eine Zentrierwirkung auf die Welle 2 aus. Dies setzt selbstverständlich voraus, daß die Drosseln 7 jeweils so eingestellt sind, daß in der Kammer 34' aufgrund des durch den Dichtungsspalt 40 abfließenden Fluids eine merkliche Druckabsenkung auftritt, wenn sich aufgrund einer radialen Verschiebung der Welle 2 relativ zur Buchse 3 der in axialer Richtung an das betreffende Nutsegment 34' angrenzende Dichtungsspalt 40 vergrößert. Verschiebt sich umgekehrt die Welle 2 unter Ausnutzung des vorhandenen radialen Spiels in Richtung auf eines der Nutsegmente 34', wird der in diesem Bereich angrenzende Dichtungsspalt 40 verkleinert, es kann dementsprechend weniger Entlastungsfluid durch den Dichtungsspalt 40 entweichen und das über die Drossel 7 unter Druck nachströmende Entlastungsfluid erhöht den Druck in diesem Nutsegment 34' bis sich ein Gleichgewicht zwischen dem durch den Dichtungsspalt abfließenden Fluid und dem durch die Drossel 7 nachströmenden Fluid eingestellt hat. Vergrößert sich der Druck in einem der Nutsegmente 34' im Verhältnis zu den beiden anderen Nutsegmenten 34', so sorgt der höhere Druck in dem erstgenannten Nutsegment 34' für eine radiale Verschiebung der Welle 2 zum Zentrum hin. Dadurch wird der Druck in dem erstgenannten Nutsegment 34' abgesenkt und in den beiden anderen Segmenten 34' erhöht und es stellt sich schließlich ein Gleichgewicht ein, bei dem die Welle 2 optimal zentriert ist. Zwar kann es noch geringfügige Schwankungen und Vibrationen der Welle 2 um die ideal zentrierte Position herum geben, jedoch wird durch diese Zentrierwirkung die zwischen den Flächen 28, 38 auftretende Reibung insgesamt minimiert.

Ein weiteres, in Figur 1 nicht erkennbares Merkmal der Buchse 3 liegt vor in Form eines Paares von Entkopplungsnuten 36, von denen in Figur 2 wiederum nur die in der rechten Hälfte mit Bezugszeichen versehen ist und beschrieben wird. Die linke Hälfte der Buchse 3 ist spiegelbildlich zur rechten Hälfte aufgebaut. Die an der Innenfläche an der Buchse 3 und konkret als Aussparung in der Dichtfläche 38 vorgesehene Entkopplungsnut 36 ist in axialer Richtung zwischen der Zufuhrnut 32 für das Arbeitsfluid und den Nutsegmenten 34' für das Entlastungsfluid angeordnet. Diese Entlastungsnut 36 ist mit in der Buchse 3 radial und axial verlaufenden Bohrungen bzw. Leitungen 37 verbunden, die zu in Figur 1 dargestellten Lecksammelräumen 26' führen, welche über Bohrungen 26 in dem Gehäuse 1 zu einer Leckwanne 8 führen.

Wie man in Figur 2 erkennt, werden etwa 2/3 der Gleitdichtfläche 38 der Buchse 3 von dem Entlastungsfluid erfaßt, welches ausgehend von den Nutsegmenten 34', entweder über die Entkopplungsnut 36 oder die Stirnseite der Buchse 3 in den Lecksammelraum 26' entweicht. Näherungsweise kann man davon ausgehen, daß der Druck entlang des Überganges des Entlastungsfluids von dem Nutsegment 34' zu der Entlastungsnut 36 oder zur freien Stirnseite der Buchse 3 in etwa linear mit dem Abstand zu dem Nutsegment 34' abfällt, während im Bereich der Nut 34 bzw. 34' selbst der volle Druck ansteht. im Mittel wirkt also auf die von dem Entlastungsfluid beaufschlagte Fläche etwas mehr als der halbe Druck, der in dem Nutsegment 34' ansteht. Wenn zusätzlich Arbeitsfluid durch die Bohrung 31 und die Zufuhrnut 32 zugeführt wird, so fließt ein Leckstrom dieses Arbeitsfluids über den Dichtungsspalt zwischen der Fläche 38 und der Welle zu der Entkopplungsnut 36 ab und beaufschlagt auch diesen Teil der Dichtungsfläche 38 mit entsprechendem Druck. Dies trägt zusätzlich zu einer Verminderung der Reibung zwischen den Gleitdichtflächen 38, 28 bei, wobei der von den Segmenten 34' und den benachbarten Abschnitten des Dichtungsspaltes 40 ausgeübte Druck zusätzlich die Zentrierung der Welle 2 bewirkt. Mit einer solchen Ausgestaltung ist es möglich, Drehdurchführungen bei großen Drehzahlen bzw. Durchführungsradien und sehr hohen Übertragungsdrücken zu betreiben, ohne das im Dichtungsspalt 40 übermäßig hohe Verluste an Arbeitsfluid auftreten. Die erfindungsgemäße Ausgestaltung mit separaten Entlastungsnuten bzw. Nutsegmenten bewirkt nämlich, daß die Buchsen mit relativ engen Toleranzen an den Umfang der Welle angepaßt werden können, wodurch der Leckstrom auch bei hohen Überführungsdrücken minimal gehalten wird und wobei gleichzeitig die Drukentlastungseinrichtung dennoch das Entstehen übermäßiger Reibung bzw. Reibungswärme zu vermeiden hilft. Zusätzliche, reibungsvermindernde Effekte erzielt man selbstverständlich auch durch konventionelle Maßnahmen, wie z.B. spezielle Gleitflächenbeschichtungen. So könnte z.B. der Mantel der Welle mit einer Keramikschicht versehen werden, während die Innenfläche 38 der Buchse eine spezielle Auskleidung mit einer Gleitlegierung erhalten könnte.

## Patentansprüche

1. Drehdurchführung zur Überführung von unter Druck stehendem Arbeitsfluid von einem stehenden (1) in ein rotierendes Maschinenteil (2) und/oder umgekehrt, mit einem dem stehenden Maschinenteil (1) zugeordneten Gehäuse (11), einer dem rotierenden Maschinenteil zugeordneten Welle (2), die sich in das Gehäuse (11) hinein und wahlweise auch durch dieses hindurch erstreckt, mindestens einer in dem Gehäuse (11) aufgenommenen Buchse (3), welche die Welle (2) dicht umfaßt und welche im Gehäuse (11) abgedichtet und radial elastisch bewegbar gelagert ist, wobei die Innenfläche der Buchse (3) und die Mantelfläche der Welle (2) mit aufeinander gleitenden Dichtflächen (38, 28) ausgestattet sind und die Buchse (3) mindestens eine radiale Bohrung (31) aufweist, die über einen auf der Mantelfläche der Welle (2) und/oder der Innenfläche der Buchse (3) umlaufenden Ringkanal (32) mit mindestens einer radialen Bohrung (23) der Welle (2) verbunden ist, für die Hindurchleitung von unter Druck stehendem Arbeitsfluids durch die Buchse (3) zu einer sich axial in der Welle (2) erstreckenden Fluidleitung (22), die mit der Radialbohrung (23) der Welle (2) in Verbindung steht, **dadurch gekennzeichnet,** daß eine Entlastungseinrichtung vorgesehen ist, indem die Buchse (3) mindestens eine von der Fluidzufuhrbohrung (31) getrennte, radiale Bohrung (5) aufweist, die sich zu einem entweder auf der Innenfläche der Buchse (3) und/oder der Außenfläche der Welle (2) ausgebildeten Entlastungskanal (34) erstreckt und mit unter Druck stehendem Fluid beaufschlagbar ist.

2. Drehdurchführung nach Anspruch 1, **dadurch gekennzeichnet**, daß der Entlastungskanal als eine ringförmig umlaufende Nut (34), vorzugsweise in der Innenfläche der Buchse (3) ausgebildet ist.

3. Drehdurchführung nach Anspruch 1 oder 2, **dadurch gekennzeichnet**, daß die Entlastungseinrichung mehrere radiale Bohrungen (5) aufweist, die in verschiedenen Umfangsabschnitten angeordnet sind und die mit jeweils einer sich über ein Umfangssegment erstreckenden Kammer verbunden sind.

4. Drehdurchführung nach Anspruch 3, **dadurch gekennzeichnet**, daß in der Fluidzufuhr für jede der Kammern (34') eine Drosseleinrichtung (7) vorgesehen ist.

5. Drehdurchführung nach einem der Ansprüche 2 bis 4, **dadurch gekennzeichnet**, daß je eine Entlastungseinrichtung in axialer Richtung beiderseits der für das Arbeitsfluid vorgesehen radialen Bohrung (31) vorgesehen ist.

6. Drehdurchführung nach einem der Ansprüche 1 bis 5, **dadurch gekennzeichnet**, daß zwischen der Entlastungseinrichtung und der Zufuhr (31, 32) für Arbeitsfluids in dem Gleitdichtungsbereich eine ringförmig umlaufende Entkopplungsnut (36) vorgesehen ist, die nach außen offen bzw. über Bohrungen (37) mit einem Leckssammelraum (8) verbunden ist.

7. Drehdurchführung nach einem der Ansprüche 1 bis 6, **dadurch gekennzeichnet**, daß die Entlastungskammern von derselben Druckquelle beaufschlagt werden, die für die Zufuhr des Arbeitsfluids vorgesehen ist.

8. Drehdurchführung nach einem der Ansprüche 1 bis 6, **dadurch gekennzeichnet**, daß für die Entlastungseinrichtung eine separate Druckquelle vorgesehen ist, die vorzugsweise dasselbe Arbeitsfluid zuführt, welches auch der Durchführung (31) für Arbeitsfluid zugeführt wird.

## Claims

1. Rotary transmission leadthrough for transferring pressurised working fluid from a stationary machine part (1) to a rotating machine part (2) and / or vice versa, with a housing (11) which is associated with the stationary machine part (1), a shaft (2) which is associated with the rotating machine part and extends into the housing (11) and optionally also through the latter, and at least one bush (3) which is accomodated in the housing (11), closely surrounds the shaft (2) and is mounted in the housing (11) in such a way that the bush (3) is sealed and can move in a radially resilient manner. The inner surface of the bush (3) and the generated surface of the shaft (2) are equipped with sealing surfaces (38, 28) which slide one on top of the other, and the bush (3) has at least one radial bore (31) which is connected to at least one radial bore (23) in the shaft (2) via a peripheral annular duct (32) on the generated surface of the shaft (2) and / or the inner surface of the bush (3) for the passage of pressurised working fluid through the bush (3) to a fluid line (22) which extends axially in the shaft (2) and is connected to the radial bore (23) in the latter (2), distinguished by the fact that a pressure relief device is provided in that the sleeve (3) has at least one radial bore (5) which is separate from the fluid delivery bore (31) and extends to a pressure relief duct (34) which is formed on the inner surface of the bush (3) and / or on the outer surface of the shaft (2) and on which pressurised fluid can act.

2. Rotary transmission leadthrough as Claim 1, distinguished by the fact that the pressure relief duct takes the form of a peripheral annular groove (34), preferably formed in the inner surface of the bush (3).

3. Rotary transmission leadthrough as Claims 1 or 2, distinguished by the fact that the pressure relief duct has several radial bores (5) which are arranged in different peripheral sections and which are each connected with a chamber extending over a peripheral segment.

4. Rotary transmission leadthrough as Claim 3, distinguished by the fact that a choke device (7) is provided in the fluid feed for each of the chambers (34').

5. Rotary transmission leadthrough as one of Claims 2 to 4, distinguished by the fact that a pressure relief device is provided for in the axial direction on either side of the radial bore (31) provided for the working fluid.

6. Rotary transmission leadthrough as one of Claims 1 to 5, distinguished by the fact that a peripheral annular de-coupling groove (36) is provided in the sliding seal area between the pressure relief device and the feed (31, 32) for working fluids, which is externally open or linked to a leak collecting chamber (8) through bores (37).

7. Rotary transmission leadthrough as one of Claims 1 to 6, distinguished by the fact that the pressure relief chambers are acted upon by the same pressure source which is provided for the working fluid fleed.

8. Rotary transmission leadthrough as one of Claims 1 to 6, distinguished by the fact that a separate pressure source is provided for the pressure relief device, which preferably supplies the same working fluid which is also supplied to the leadthrough (31) for working fluid.

## Revendications

1. Passage tournant pour transférer du fluide de travail sous pression d'une partie de machine fixe (1) dans une partie de machine rotative (2) et/ou vice-versa, avec un boîtier (11) associé à la partie de machine fixe (1), avec un arbre (2) associé à la partie de machine rotative, arbre qui s'étend à l'intérieur du boîtier (11) et peut aussi, au choix, le traverser de part en part, et avec au moins une bague (3) reçue dans le boîtier (11), qui entoure en étanchéité l'arbre (2) et qui est montée dans le boîtier (11) à déplacement de manière étanche et en élasticité radiale, la surface intérieure de la bague (3) et la surface extérieure de l'arbre (2) étant pourvues de faces d'étanchéité (38, 28) glissant l'une sur l'autre, et la bague (3) présentant au moins un perçage radial (31), qui est relié, par l'intermédiaire d'un canal annulaire (32) faisant le tour de la surface extérieure de l'arbre (2) et/ou de la surface intérieure de la bague (3), à au moins un perçage radial (23) de l'arbre (2), afin d'amener du fluide de travail sous pression, à travers la bague (3), à une conduite de fluide (22) qui s'étend axialement dans l'arbre (2) et communique avec le perçage radial (23) de l'arbre (2), **caractérisé** en ce qu'il est prévu un dispositif de décharge, par le fait que la bague (3) présente au moins un perçage radial (5), qui est séparé du perçage d'apport de fluide (31) et qui s'étend vers un canal de décharge (34) configuré sur la surface intérieure de la bague (3) et/ou sur la surface extérieure de l'arbre (2), et peut être alimenté en fluide sous pression.

2. Passage tournant selon la revendication 1, **caractérisé** en ce que le canal de décharge est réalisé sous forme de rainure (34) annulairement entourante, de préférence dans la surface intérieure de la bague (3).

3. Passage tournant selon la revendication 1 ou 2, **caractérisé** en ce que le dispositif de décharge présente plusieurs perçages radiaux (5), qui sont disposés dans différentes parties de la circonférence et sont chacun reliés à une chambre s'étendant sur un segment circonférentiel.

4. Passage tournant selon la revendication 3, **caractérisé** en ce qu'un dispositif d'étranglement respectif (7) est prévu dans l'alimentation en fluide pour chacune des chambres (34').

5. Passage tournant selon une des revendications 2 à 4, **caractérisé** en ce qu'un dispositif de décharge respectif est prévu de part et d'autre, en direction axiale, du perçage radial (31) prévu pour le fluide de travail.

6. Passage tournant selon une des revendications 1 à 5, **caractérisé** en ce qu'une rainure de découplage (36) annulairement entourante est prévue dans la région du joint glissant entre le dispositif de décharge et l'alimentation (31, 32) en fluide de travail, rainure qui est ouverte vers l'extérieur ou est reliée par l'intermédiaire de perçages (37) à une chambre collectrice de fuite (8).

7. Passage tournant selon une des revendications 1 à 6, **caractérisé** en ce que les chambres de décharge sont alimentées par la même source de pression qui est prévue pour l'apport du fluide de travail.

8. Passage tournant selon une des revendications 1 à 6, **caractérisé** en ce qu'une source de pression séparée est prévue pour le dispositif de décharge, laquelle apporte de préférence le même fluide de travail qui est également apporté au passage (31) de fluide de travail.
